Europäisches Patentamt

European Patent Office

Office européen des brevets

(19)

(11) Veröffentlichungsnummer: **0 231 854 B1**

(12) **EUROPÄISCHE PATENTSCHRIFT**

(45) Veröffentlichungstag der Patentschrift: 03.04.91     (51) Int. Cl.⁵: **H04B 3/23**

(21) Anmeldenummer: 87101065.8

(22) Anmeldetag: 27.01.87

(54) Echokompensator.

(30) Priorität: 30.01.86 DE 3602803

(43) Veröffentlichungstag der Anmeldung:
12.08.87 Patentblatt 87/33

(45) Bekanntmachung des Hinweises auf die
Patenterteilung:
03.04.91 Patentblatt 91/14

(84) Benannte Vertragsstaaten:
AT BE CH DE ES FR GB GR IT LI NL SE

(56) Entgegenhaltungen:
EP-A- 0 054 329
GB-A- 2 164 827

PATENT ABSTRACTS OF JAPAN, Band 9, Nr.
52 (E-301)[1776], 7. März 1985; & JP-A-59 193
637

NACHRICHTENTECHNIK ELEKTRONIK, Band
34, Nr. 4, 1984, Seiten 129-132, Ost-Berlin,
DD; M. GRONAK: "Wirkprinzipien der adaptiven Echokompensation bei der Datenübertragung"

(73) Patentinhaber: **Siemens Aktiengesellschaft**
**Wittelsbacherplatz 2**
**W-8000 München 2(DE)**

(72) Erfinder: **Pfeil, von, Dirsko, Dipl.-Ing. (FH)**
**Dammstrasse 14**
**W-8021 Hohenschäftlarn(DE)**
Erfinder: **Kemmesies, Hartmut, Dipl.-Ing.**
**Schulstrasse 46**
**W-8152 Feldkirchen(DE)**
Erfinder: **Waretzi, Erhard**
**Forstenrieder Allee 237**
**W-8000 München 71(DE)**

## Beschreibung

Die Erfindung bezieht sich auf einen Echokompensator, bei dem ein adaptives Transversalfilter mit seinem Eingang am Empfangsweg und mit seinem Ausgang am Minuseingang einer Subtrahierschaltung im Sendeweg einer digitalen oder bei Verwendung von Analog-Digital- . bzw. Digital-Analog-Umsetzern für einen digitalen Betrieb des adaptiven Transversalfilters auch analogen Fernleitung angeordnet ist und bei dem der Ausgang der Subtrahierschaltung mit dem Steuereingang des adaptiven Transversalfilters verbunden ist.

Ein derartiger Echokompensator ist beispielsweise aus der DE-OS 20 63 271 und der Zeitschrift "Nachrichtentechnik, Elektronik", Berlin, 34 (1983) IV, Seiten 129 bis 132, Bild 5b bekannt.

Adaptive Transversalfilter sind auch in der Zeitschrift "Frequenz, 28 (1974) V, Seiten 118 bis 122 und 28 (1974) VI, Seiten 155 bis 161 beschrieben.

Echokompensatoren werden in internationalen Kopfämtern an den Schnittstellen zwischen einer internationalen Fernleitung großer Länge wie einer Seekabel- oder Satellitenverbindung und einer nationalen in einen Vierdraht-Zweidrahtübergang in Form einer Gabel und in eine anschließende Zweidrahtleitung mündenden Leitung, dem sogenannten End-Echoweg, angeordnet.

Trennen die Gabeln den Hin- und den Rückweg nicht vollständig, so entstehen durch die Laufzeit des Signals bedingt Echos. Von der Sendestelle gelangt ein Sprachsignal nach der Verzögerungszeit über den Hin- und Rückweg gedämpft zurück zum Sprecher. Auf einer Fernleitung kann die Laufzeit 300 ms auf den End-Echoweg 40 ms betragen. Je länger das Echo läuft um so störender wirkt es. ·

Die Echokompensatoren enthalten zur Erzeugung eines künstlichen Echos ein Transversalfilter, dessen Koeffizienten sich selbsttätig derart einstellen, daß alle Ähnlichkeit zwischen einem Empfangs- und einem Sendesignal verschwindet. Das Transversalfilter stellt somit eine Nachbildung des End-Echoweges dar. Es stellte sich jedoch heraus, daß der Regelprozeß nicht zufriedenstellend arbeitete, weil die Koeffizienten aus einem vorgegebenen Bereich herauslaufen können, was mit einer starken Geräuschentwicklung am Sendewegausgang verbunden ist.

In der DE-OS 26 47 305 wurde zur Verbesserung vorgeschlagen, entweder alle Koeffizienten aufzuaddieren oder die Koeffizienten, die eine Schwelle übersteigen, zu zählen. Übersteigt die Summe oder das Zählergebnis einen Schwellenwert, wird der gesamte Koeffizientensatz zurückgesetzt.

Aus den "Patent Abstracts of Japan", Band 9, Nr. 52 (E-301) (1776), 07.03.1985 bzw. aus der japanischen Offenlegungsschrift JP-A-59 193 637 ist ein Echokompensator bekannt, der aus einem Haupt- und aus einem Hilfs-Echokompensator mit einer gemeinsamen Korrektur- und einer gemeinsamen Speicherschaltung besteht. Dem aus dem Empfangsweg stammenden Eingangssignal des Hilfs- Echokompensators wird ein breitbandiges Rauschsignal hinzugefügt. Sein Ausgangssignal regelt den Koeffizientensatz des Haupt-Echokompensators derart, daß eine Verstärkung außerhalb des Nutzbandes verhindert wird.

Ein Echokompensator weist einen Koeffizientensatz von mehreren hundert Koeffizienten auf. Bei einer Anordnung mit Haupt- und Hilfs-Echokompensator ist gegenüber einem einfachen Echokompensator die doppelte Anzahl von Multiplizierern erforderlich. Außerdem ist zwischen Haupt- und Hilfs-Echokompensator eine der Koeffizientenanzahl entsprechende Zahl von Verbindungsleitungen notwendig; es sei denn, es wird dort ein Zeitmultiplexsystem eingeführt.

Der Erfindung liegt die Aufgabe zugrunde, einen Echokompensator anzugeben, bei dem mit weniger Aufwand eine Verstärkung außerhalb des Nutzbandes vermieden wird.

Ausgehend von einem Echokompensator der einleitend geschilderten Art wird diese Aufgabe erfindungsgemäß dadurch gelöst, daß ein Zusatzsignalerzeuger zur Erzeugung eines Zusatzsignals in einem Frequenzbereich außerhalb des Übertragungsbereichs auf der Fernleitung und eine Addierschaltung vorgesehen sind, die mit ihrem ersten Eingang und mit ihrem Ausgang zwischen dem Empfangsweg und dem Eingang des adaptiven Transversalfilters eingeschleift ist und deren zweiter Eingang mit dem Ausgang des Zusatzsignalerzeugers verbunden ist.

Als Zusatzsignalerzeuger dient in vorteilhafter Weise ein Gleichspannungsgenerator, ein Wobbelgenerator oder ein Rauschgenerator . Die beiden letzten sind bei einem Nutzfrequenzbereich von 300-3400 Hz insbesondere für Frequenzbereiche 0 - 100 Hz und 3,9 - 4 kHz vorgesehen. Soll das Zusatzsignal digital weiterverarbeitet werden, muß eine Analog-Digital-Umsetzung erfolgen.

Die Erfindung geht von der Erkenntnis aus, daß der Regelprozeß im Transversalfilter nur für Frequenzen erfolgen kann, die auch tatsächlich im Empfangssignal enthalten sind. Beim Fehlen von Frequenzen können sich daher Koeffizientensätze bilden (bzw. durch Störungen entstandene nicht rückgebildet werden), die zwar das Echo kompensieren, aber wesentlich größer sind als es erforderlich wäre. Dies bedingt die Nachteile, daß die Aussteuerbarkeit sinkt und daß bei einer schrittweisen Steuerung, bei der die Schrittweite auch von der Größe des Koeffizienten abhängt, sich zu große Schritte ergeben.

Als Rauschgenerator ist ein Takterzeuger, ein Taktteiler und ein programmierbarer Festspeicher (PROM) vorteilhaft, wobei der Taktteiler die Adressen des programmierbaren Festspeichers in festem Takt umschaltet.

Ein Echokompensator zur Kompensation gepreßter Digitalsignale auf der Fernleitung läßt sich in vorteilhafter Weise realisieren, wenn eine digitale Subtrahierschaltung vorgesehen ist, wenn der digitalen Subtrahierschaltung ein erster digitaler Expander vor- und ein digitaler Kompressor nachgeschaltet ist, wenn eine digitale Addierschaltung vorgesehen ist und wenn dem ersten Eingang der digitalen Addierschaltung ein zweiter digitaler Expander vorgeschaltet ist. An die Stelle der digitalen Addierschaltung und des zweiten digitalen Expanders kann auch ein eine Gleichspannung hinzufügender dritter digitaler Expander vorgesehen sein. Der Kompressor und die Expander können als programmierbare Festspeicher (PROM) ausgebildet sein.

Ein Echokompensator für Analogsignale auf der Fernleitung läßt sich vorteilhaft realisieren, wenn dem Ausgang des adaptiven Transversalfilters ein zweiter Digital-Analog-Umsetzer und ein Tiefpaß nachgeschaltet sind, wenn dem Steuereingang des adaptiven Transversalfilters ein erster Bandpaß und ein dritter Analog-Digital-Umsetzer vorgeschaltet sind und wenn der digitalen Addierschaltung ein zweiter Bandpaß und ein vierter Analog-Digital-Umsetzer vorgeschaltet sind. Dabei kann die digitale Addierschaltung durch eine analoge Addierschaltung ersetzt sein und können die analoge Addierschaltung und der vierte Analog-Digital-Umsetzer vertauscht sein.

Analogsignale lassen sich in vorteilhafter Weise auch dann kompensieren, wenn der digitalen Subtrahierschaltung ein fünfter Analog-Digital-Umsetzer vor- und ein dritter Digital-Analog-Umsetzer nachgeschaltet ist und wenn der digitalen Addierschaltung der vierte Analog-Digital-Umsetzer vorgeschaltet ist.

Anhand von Ausführungsbeispielen wird die Erfindung nachstehend näher erläutert.

Figur 1     zeigt eine erste Variante eines erfindungsgemäßen Echokompensators für gepreßte Digitalsignale,

Figur 2     zeigt ein bekanntes adaptives Transversalfilter,

Figur 3     zeigt einen Rausch- oder Wobbelgenerator,

Figur 4     zeigt eine zweite Variante eines erfindungsgemäßen Echokompensators für gepreßte Digitalsignale,

Figur 5     zeigt eine erste Variante eines erfindungsgemäßen Echokompensators für Analogsignale,

Figur 6     zeigt eine zweite Variante eines erfindungsgemäßen Echokompensators für Analogsignale und

Figur 7     zeigt eine dritte Variante eines erfindungsgemäßen Echokompensators für Analogsignale.

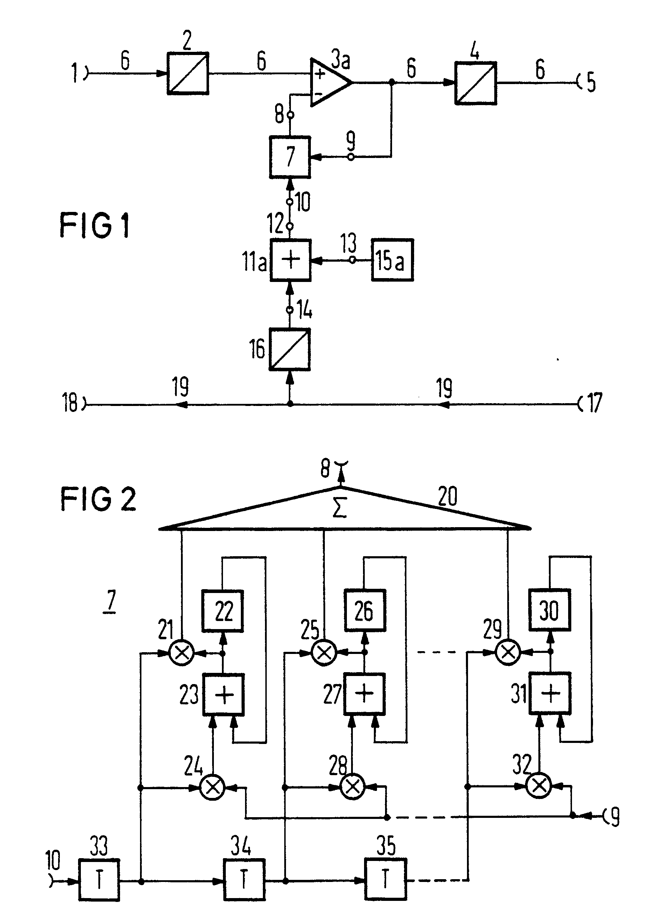

Figur 1 zeigt einen erfindungsgemäßen Echokompensator an einer Fernleitung, über die gepreßte Digitalsignale übertragen werden. Die Anordnung zeigt einen Sendeweg 6 mit Eingang 1 und Ausgang 5 und einen Empfangsweg 19 mit Eingang 17 und Ausgang 18. In den Sendeweg 6 ist ein digitaler Expander 2, eine digitale Subtrahierschaltung 3a und ein digitaler Kompressor 4 eingefügt. Ein Querzweig enthält ein adaptives Transversalfilter 7 mit Eingang 10, Steuereingang 9 und Ausgang 8, eine digitale Addierschaltung 11a mit einem ersten Eingang 13 und einem zweiten Eingang 14, einen digitalen Expander 16 und einen Zusatzsignalerzeuger 15a für Digital-signale. Die Kompandierung erfolgt jeweils zwischen 8 bit und 13 bit.

Ein im Empfangsweg 19 eintreffendes gepreßtes digitales Signal, das einem Analogsignal im Frequenzbereich von 300 bis 3400 Hz entspricht, wird zur Rückgängigmachung der Kompression im digitalen Expander 16 gedehnt und in der digitalen Addierschaltung 11a zu einem Zusatzsignal aus dem Zusatzsignalerzeuger 15a addiert. Die Summe wird dem Eingang 10 des adaptiven Transversalfilters 7 zugeführt. Dieses empfängt gleichzeitig an seinem Steuereingang 9 ein vom Ausgang der digitalen Subtrahierschaltung 3a kommendes Fehlersignal. Dabei stellen sich seine Koeffizienten selbsttätig derart ein, daß das an seinem Ausgang 8 erzeugte Signal zu dem am Sendewegeingang 1 anliegenden Signal am ähnlichsten wird. In diesem Fall wird die von der digitalen Subtrahierschaltung 3a gebildete Differenz der beiden Signale am kleinsten.

Das Zusatzsignal ist entweder eine Gleichspannung oder ein Wobbel- bzw. Rauschsignal im Frequenzbereich von 0 - 100 Hz und 3900 - 4000 Hz, die jeweils in ein Digitalsignal umgesetzt sind. Diese Frequenzbereiche weisen einen hinreichenden Abstand zum Nutzfrequenzbereich auf. Da eine Gleichspannung oder Signale mit solcher Frequenz am Eingang 1 des Sendeweges 6 nicht auftreten, wird das adaptive Transversalfilter 7 seinen Koeffizientensatz automatisch derart einstellen, daß diese auch am Ausgang 5 des Sendeweges 6 verschwinden. Damit werden die genannten Nachteile der bekannten Echokompensatoren verhindert.

Figur 2 zeigt das adaptive Transversalfilter 7 detailliert. Es enthält eine Summierschaltung 20 sowie je dreihundertundzwanzig Multiplizierschaltungen 21, 25 und 29, Speicher 22, 26 und 30, Addierschaltungen 23, 27 und 31, Vorzeichen-Multiplizierschaltungen (Korrelatoren) 24, 28 und 32 und Verzögerungsglieder 33, 34 und 35. Die 13-bit-Codewörter an den Eingängen 9 und 10 werden im 8-kHz-Takt parallel verarbeitet. Am Eingang 10 liegen Codewörter an. Wegen der zusätzlich überlagerten Rausch-, Wobbel oder Gleichspannung sind dort auch 14 bit möglich. Am Eingang 9 können es weniger als 13 bit sein; evtl. nur ein Vorzeichen-Bit.

An die Stelle der einfachen Vorzeichen-Korrelation kann auch eine kompliziertere Schaltung treten, bei der die Schrittweite von verschiedenen Größen wie Empfangspegel, Sendepegel, Koeffizientengröße usw. abhängt.

Das am Eingang 10 anliegende Signal gelangt um 125 μs gestaffelt verzögert an die mit der Laufzeitkette 33 bis 35 verbundenen ersten Eingänge der Vorzeichen-Multiplizierschaltungen 24, 28 und 32. Gleichzeitig gelangt das Ausgangssignal der digitalen Subtrahierschaltung 3a über den Steuereingang 9 zu den zweiten Eingängen der Vorzeichen-Multiplizierschaltungen 24, 28 und 32. Diese geben dann ein positives Ausgangssignal ab, wenn an beiden Eingängen Signale gleicher Polarität anliegen. Andernfalls geben sie ein negatives Ausgangssignal ab. Diese Ausgangssignale werden in den digitalen Addierschaltungen 23, 27 und 31 zu den Inhalten der Speicher 22, 26 und 30 addiert. Die daraus resultierenden Summensignale werden einmal in den Multiplizierschaltungen 21, 25 und 29 mit den Signalen an den Anzapfungen der Laufzeitkette 33 bis 35 multipliziert und zum anderen als neuer Inhalt in die Speicher 22, 26 und 30 eingespeist. Die Ausgangssignale der Multiplizierschaltungen 21, 25 und 29 werden in der Summierschaltung 20 aufaddiert und an den Ausgang 8 abgegeben.

Die Speicher 22, 26 und 30 sollen im Mittel ungeladen sein. Bis zu einem definierten Grenzwert können sie aber positiv oder negativ aufgeladen werden; beispielsweise über eine Zweierkomplementdarstellung, bei der in einem gewissen Bereich Codewörter sowohl für positive als auch für negative Werte zur Verfügung stehen.

Der Echokompensator könnte so nach einer gewissen Zeit optimal eingestellt sein. Dies ist aber nicht der Fall, wenn bei Sprachsignalen auf dem Empfangsweg im Frequenzbereich unter 300 Hz sowie über 3400 Hz keinerlei Signale auftreten. Es können sich infolgedessen Koeffizientensätze (Inhalte der Speicher 22, 26, 30) bilden, die zwar das Echo kompensieren, aber wesentlich größer als erforderlich sind. Dies kann auch durch Störsignale verursacht werden.

Wird einmal davon ausgegangen, daß bei einer ungünstigen Konstellation alle Speicher 22, 26 und 30 einen Inhalt relativ großen positiven Werts aufweisen, dann ergäbe sich nach einer Multiplikation in den Multiplizierschaltungen 21, 25 und 29 mit einem in der Laufzeitkette 33 - 35 über der Zeit gleich oft positiven und negativen Empfangssignal ohne überlagertes Zusatzsignal und nach Akkumulation in der Summierschaltung 20 am Ausgang 8 ein Signal, das mit gleicher Wahrscheinlichkeit positiv oder negativ ist. Nach einer Negierung in der Subtrahierschaltung 3a bleibt am Steuereingang 9 ein entsprechendes Fehlsignal. Eine Korrektur des Inhaltes der Speicher 22, 26 und 30 durch die Vorzeichen-Multiplikationsschaltungen ist daher nicht möglich, er bleibt fehlerhaft zu positiv.

Wird dem Empfangssignal aber ein negatives Zusatzsignal überlagert, dann ergeben sich bei der Multiplikation mit den positiven Inhalten der Speicher 22, 26 und 30 in den Multiplizierschaltungen 21, 25 und 29 negative Signale, die sich in der Summierschaltung 20 zu einem negativen Signal am Ausgang 8 akkumulieren. Nach der anschließenden Negierung in der digitalen Subtrahierschaltung 3a entsteht ein überwiegend positives Signal am Steuereingang 9. Die Vorzeichen-Multiplizierschaltungen 24, 28 und 32 geben nun überwiegend negative Signale ab, weil das Empfangssignal mit Zusatzsignal überwiegend positiv ist. Damit verkleinern sich die Koeffizienten bzw. die Inhalte der Speicher 22, 26 und 30 in gewünschter Weise gegen Null. Ein entsprechender Ablauf würde sich ergeben, wenn ein positives Zusatzsignal überlagert worden wäre.

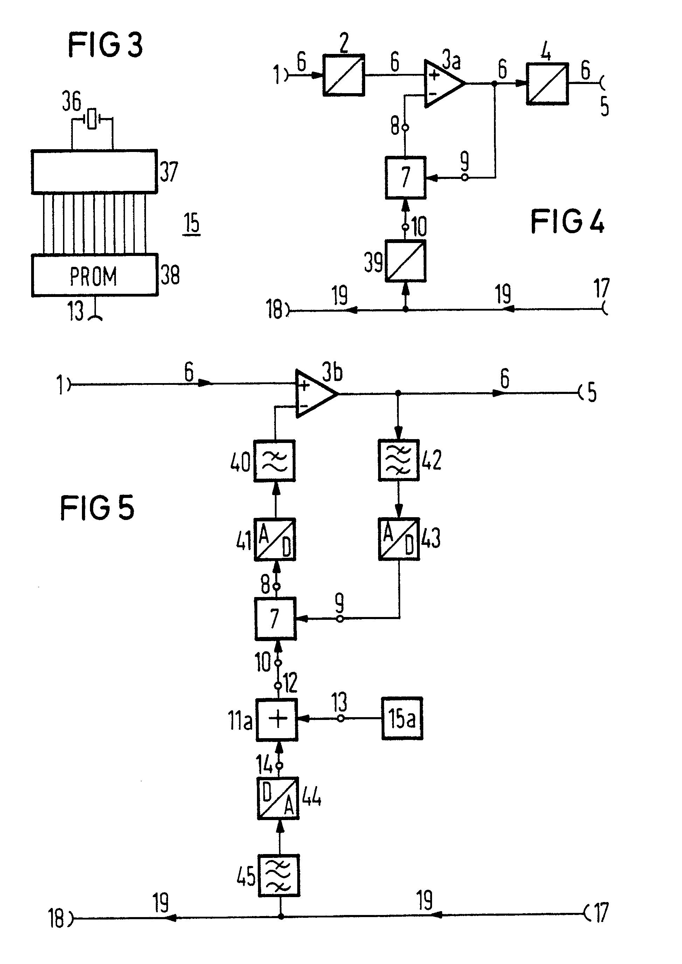

Figur 3 zeigt einen Zusatzsignalerzeuger. Er besteht aus einem Takterzeuger 36, einem Taktteiler 37 und einem programmierbaren Festspeicher (PROM) 38. Der Takt gelangt vom Taktteiler 37 über beispielsweise zehn Adressleitungen zum programmierbaren Festspeicher 38. Der Festspeicher enthält die Amplitudenwerte der Summe der Sinussignale von 7,8 Hz bis 101,6 Hz und 3898 Hz bis 4000 Hz im Frequenzabstand von 7,8125 Hz. Dieses Summensignal entspricht etwa einem weißen Rauschsignal mit dem Frequenzbereich 0 - 100 Hz und 3900 - 4000 Hz. Werden im PROM nicht die Amplitudenwerte der Summe der einzelnen Sinussignale gleichzeitig sondern stattdessen die Amplitudenwerte der Summe der einzelnen Sinussignale nacheinander abgespeichert, dann entsteht ein Wobbelsignal mit entsprechendem Frequenzbereich.

Figur 4 zeigt einen der Anordnung nach Figur 1 ähnlichen Echokompensator. Bei diesem konnte auf eine Addierschaltung verzichtet werden, weil in dem digitalen Expander 39 in Form eines programmierbaren Festspeichers (PROM) eine Gleichspannungsüberlagerung direkt einprogrammiert ist. Wegen der zusätzlichen Gleichspannung muß der Expander 39 eventuell auf 14 bit dehnen.

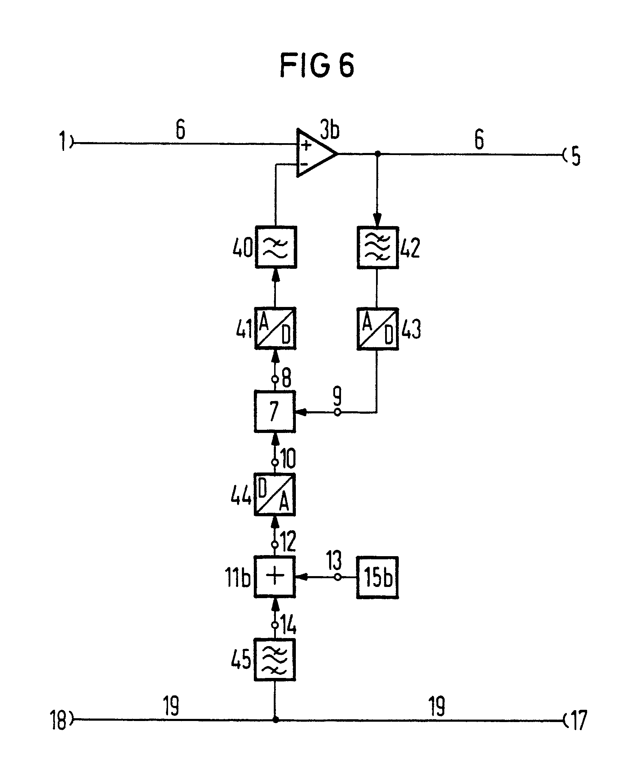

Figur 5 zeigt einen Echokompensator für eine Fernleitung, auf der Analogsignale übertragen werden. Die Anordnung enthält wieder einen Sendeweg 6 mit Eingang 1 und Ausgang 5, in den eine analoge Subtrahierschaltung 3b eingefügt ist. Der Empfangsweg 19 beginnt mit einem Eingang 17 und endet mit einem Ausgang 18. Der Querzweig enthält einen Tiefpaß 40, Bandpässe 42 und 45, Analog-Digitalumsetzer 43 und 44, einen Digital-Analogumsetzer 41, das Transversalfilter 7, die digitale Addierschaltung 11a und den Zusatzsignalerzeuger 15a.

Der Kern des Echokompensators mit dem Transversalfilter 7 der digitalen Addierschaltung 11a und dem Zusatzsignalerzeuger 15a arbeitet in der gleichen Weise wie die entsprechende Anordnung in Figur 1. Im Gegensatz zu dieser werden lediglich die Digitalsignale über Bandpaßfilter 42 bzw. 45 und Analog-Digitalumsetzer 43 bzw. 44 zugeführt und über den Digital-Analogumsetzer 41 und den Tiefpaß 40 weggeführt. Die Subtrahierschaltung 3b muß entsprechend analog arbeiten.

Die Anordnung nach Figur 6 unterscheidet sich von der nach Figur 5 dadurch, daß der Analog-Digitalumsetzer 44 und die Addierschaltung vertauscht sind. Dabei tritt an die Stelle der digitalen Addierschaltung 11a eine analoge Addierschaltung 11b. Abgesehen davon, daß die Addition hier im analogen Bereich erfolgt, ist die Wirkungsweise dieselbe wie bei der nach Figur 5.

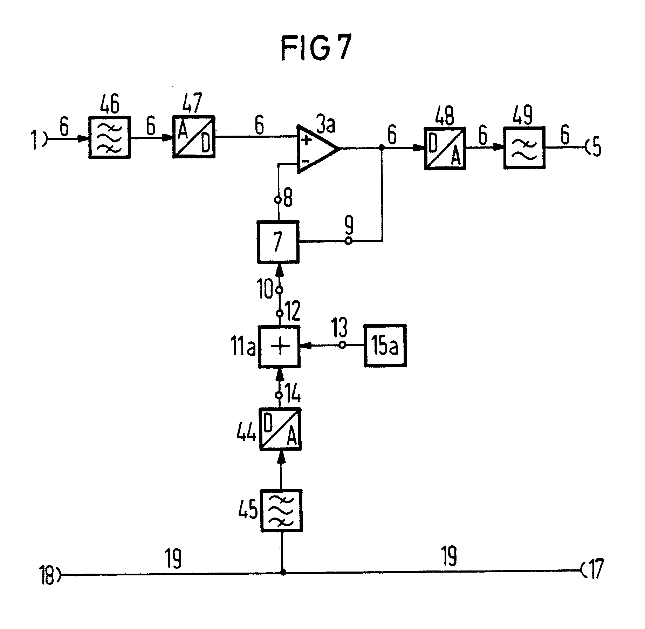

Figur 7 zeigt einen weiteren Echokompensator in einer Fernleitung für Analogsignale. Hier erfolgt eine Umsetzung in Digitalsignale jedoch bereits auf dem Sendeweg. Zu diesem Zwecke sind in dieser Anordnung ein Bandpaßfilter 46, ein Analog-Digitalumsetzer 47, eine digitale Subtrahierschaltung 3a, ein Digital-Analogumsetzer 48 und ein Tiefpaß 49 vorgesehen. Ansonsten arbeitet der Echokompensator so wie der nach Figur 5.

## Ansprüche

1. Echokompensator, bei dem ein adaptives Transversalfilter (7) mit seinem Eingang (10) am Empfangsweg (19) und mit seinem Ausgang (8) am Minus-Eingang einer Substrahierschaltung (3a, 3b) im Sendeweg (6) einer digitalen oder bei Verwendung von Analog-Digital- bzw. Digital-Analogumsetzern für einen digitalen Betrieb des adaptiven Transversalfilters (7) auch analogen Fernleitung (6, 19) angeordnet ist und bei dem der Ausgang der Subtrahierschaltung (3a, 3b) mit dem Steuereingang (9) des adaptiven Transversalfilters (7) verbunden ist,
**dadurch gekennzeichnet,**
daß ein Zusatzsignalerzeuger (15) zur Erzeugung eines Zusatzsignals in einem Frequenzbereich außerhalb des Übertragungsbereichs auf der Fernleitung (6, 19) vorgesehen ist und daß eine Addierschaltung (11a, 11b) vorgesehen ist, die mit ihrem ersten Eingang (14) und mit ihrem Ausgang (12) zwischen den Empfangsweg (19) und dem Eingang (10) des adaptiven Transversalfilters (7) eingeschleift ist und deren zweiter Eingang (13) mit dem Ausgang des Zusatzsignalerzeugers (15) verbunden ist.

2. Echokompensator nach Anspruch 1,
**dadurch gekennzeichnet**
daß als Zusatzsignalerzeuger (15b) ein Gleichspannungsgenerator, ein Wobbelgenerator oder ein Rauschgenerator vorgesehen ist.

3. Echokompensator nach den Anspruch 2,
**dadurch gekennzeichnet,**
daß ein Wobbel- oder Rauschgenerator (15b) für die Frequenzbereiche 0 bis 100 Hz und 3,9 bis 4 kHz vorgesehen sind.

4. Echokompensator nach Anspruch 2 oder 3,
**dadurch gekennzeichnet,**
daß als Rauschgenerator (15b) ein Takterzeuger (36), ein Taktteiler (37) und ein programmierbarer Festspeicher (38) vorgesehen sind und der Taktteiler (37) die Adressen des programmierbaren Festspeichers (38) in festem Takt umschaltet (Fig. 3).

5. Echokompensator nach den Ansprüche 2 bis 4,
**dadurch gekennzeichnet,**
daß der Zusatzsignalerzeuger (15b) digitale Zusatzsignale erzeugt.

6. Echokompensator nach einem der Ansprüche 1 bis 5 für gepreßte Digitalsignale auf der Fernleitung (6,19),
**dadurch gekennzeichnet,**
daß eine digitale Subtrahierschaltung (3a) vorgesehen ist, daß der digitalen Subtrahierschaltung (3a) ein erster digitaler Expander (2) vor- und ein digitaler Kompressor (4) nachgeschaltet sind,
daß eine digitale Addierschaltung (11a) vorgesehen ist und daß dem ersten Eingang der digitalen Addierschaltung (11a) ein zweiter digitaler Expander (16) vorgeschaltet ist (Fig.1).

7. Echokompensator nach Anspruch 6,
**dadurch gekennzeichnet,**
daß anstelle der digitalen Addierschaltung (11a) und des zweiten digitalen Expander (16) ein eine Gleichspannung hinzufügender dritter digitaler Expander (39) vorgesehen ist (Fig. 4).

8. Echokompensator nach einem der Ansprüche 1 bis 5 für Analogsignale auf der Fernleitung (6,19),

**dadurch gekennzeichnet,**

daß dem Ausgang (8) des adaptiven Transversalfilters (7) ein zweiter Digital-Analog-Umsetzer (41) und ein erster Tiefpaß (40) nachgeschaltet sind,

daß dem Steuereingang (9) des adaptiven Transversalfilters (7) ein erster Bandpaß (42) und ein dritter Analog-Digital-Umsetzer (43) vorgeschaltet sind und

daß der digitalen Addierschaltung (11a) ein zweiter Bandpaß (45) ein vierter Analog-Digital-Umsetzer (44) vorgeschaltet sind (Fig. 5).

9. Echokompensator nach Anspruch 8,

**dadurch gekennzeichnet,**

daß die digitale Addierschaltung (11a) durch eine analoge Addierschaltung (11b) ersetzt ist und

daß die analoge Addierschaltung (11b) und der vierte Analog-Digital-Umsetzer (44) vertauscht sind (Fig. 6).

10. Echokompensator nach einem der Ansprüche 1 bis 5 für Analogsignale auf der Fernleitung (6,19),

**dadurch gekennzeichnet,**

daß der digitalen subtrahierschaltung (3a) ein dritter Bandpaß (46) und ein dritter Analog-Digital-Umsetzer (47) vor-und ein zweiter Digital-Analog-Umsetzer (48) und ein zweiter Tiefpaß (49) nachgeschaltet sind und daß der digitalen Addierschaltung (11a) der dritte Bandpaß (45) und der zweite Analog-Digital-Umsetzer (44) vorgeschaltet sind (Fig. 7).

## Claims

1. Echo compensator, in which an adaptive transversal filter (7) is arranged with its input (10) at the receiving path (19) and with its output (8) at the negative input of a subtracting circuit (3a, 3b) in the transmitting path (6) of a digital or, if analog/digital or digital/analog converters are used for digitally operating the adaptive transversal filter (7), also an analog trunk circuit (6, 19) and in which the output of the subtracting circuit (3a, 3b) is connected to the control input (9) of the adaptive transversal filter (7), characterised in that an additional-signal generator (15) for generating an additional signal in a frequency band outside the transmission band is provided in the trunk circuit (6, 19), and in that an adding circuit (11a, 11b) is provided which with its first input (14) and with its output (12) is looped in between the receiving path (19) and the input (10) of the adaptive transversal filter (7) and the second input (13) of which is connected to the output of the additional-signal generator (15).

2. Echo compensator according to Claim 1, characterised in that a direct-voltage generator, a sweep generator or a noise generator is provided as additionalsignal generator (15b).

3. Echo compensator according to Claim 2, characterised in that a sweep or noise generator (15b) for the frequency bands of 0 to 100 Hz and 3.9 to 4 kHz are provided.

4. Echo compensator according to Claim 2 or 3, characterised in that a clock generator (36), a clock divider (37) and a programable read-only memory (38) are provided as noise generator (15b) and the clock divider (37) switches the addresses of the programable read-only memory (38) at fixed intervals (Figure 3).

5. Echo compensator according to one of Claims 2 to 4, characterised in that the additional-signal generator (15a) generates digital additional signals.

6. Echo compensator according to one of Claims 1 to 5 for compressed digital signals in the trunk circuit (6, 19), characterised in that a digital subtracting circuit (3a) is provided, in that the digital subtracting circuit (3a) is preceded by a first digital expander (2) and followed by a digital compressor (4), in that a digital adding circuit (11a) is provided, and in that the first input of the digital adding circuit (11a) is preceded by a second digital expander (16) (Figure 1).

7. Echo compensator according to Claim 6, characterised in that, instead of the digital adding circuit (11a) and of the second digital expander (16), a third digital expander (39) adding a direct voltage is provided (Figure 4).

8. Echo compensator according to one of Claims 1 to 5, for analog signals in the trunk circuit (6, 19), characterised in that the output (8) of the adaptive transversal filter (7) is followed by a second digital/analog converter (41) and a first low-pass filter (40), in that the control input (9) of the adaptive transversal filter (7) is preceded by a first bandpass filter (42) and a third analog/digital converter (43), and in that the digital adding circuit (11a) is preceded by a second bandpass filter (45) and a fourth analog/digital converter (44) (Figure 5).

9. Echo compensator according to Claim 8, characterised in that the digital adding circuit (11a) is replaced by an analog adding circuit (11b), and in that the analog adding circuit (11b) and the fourth analog/digital converter (44) are exchanged (Figure 6).

10. Echo compensator according to one of Claims 1 to 5, for analog signals in the trunk circuit (6, 19), characterised in that the digital subtracting circuit (3a) is preceded by a third bandpass filter (46) and a third analog/digital converter (47) and followed by a second digital/analog converter (48) and a second low-pass filter (49), and in that the digital adding circuit (11a) is preceded by the third bandpass filter (45) and the second analog/digital converter (44) (Figure 7).

**Revendications**

1. Suppresseur d'échos, dans lequel un filtre transversal adaptatif (7) est raccordé par son entrée (10) à la branche de réception (19) et par sa sortie (8) à l'entrée négative d'un circuit soustracteur (3a,3b) situé dans la branche d'émission (6) d'une ligne interurbaine numérique ou, dans le cas d'utilisation de convertisseurs analogique/numérique ou numérique/analogique pour un fonctionnement du filtre transversal adaptatif (7), également d'une ligne interurbaine analogique (6,19) et dans lequel la sortie du circuit soustracteur (3a,3b) est raccordée à l'entrée de commande (9) du filtre transversal adaptatif (7), caractérisé par le fait
qu'il est prévu un générateur de signaux supplémentaires (15) servant à produire un signal supplémentaire dans une gamme de fréquences à l'extérieur de la gamme de transmission dans la ligne interurbaine (6,19), et
qu'il est prévu un circuit additionneur (11a,11b), dont la première entrée (14) et la sortie (12) sont insérées dans une boucle entre la branche de réception (19) et l'entrée (10) du filtre transversal adaptatif (7) et dont la seconde entrée (13) est raccordée à la sortie du générateur de signaux supplémentaires (15).

2. Compensateur d'échos suivant la revendication 1, caractérisé par le fait qu'il est prévu, comme générateur de signaux supplémentaires (15b), un générateur de tension continue, un générateur de vobulation ou un générateur de bruit.

3. Suppresseur d'échos suivant la revendication 2, caractérisé par le fait qu'il est prévu un générateur de vobulation ou un générateur de bruit (15b) pour les gammes de fréquences allant de 0 à 100 Hz et de 3,9 à 4 kHz.

4. Suppresseur d'échos suivant la revendication 2 ou 3, caractérisé par le fait qu'il est prévu, comme générateur de bruit (15b), un générateur de cadence (36), un diviseur de cadence (37) et une mémoire morte programmable (38) et que le diviseur de cadence (37) commute les adresses de la mémoire morte programmable (38) selon une cadence fixe (figure 3).

5. Suppresseur d'échos suivant l'une des revendications 2 à 4, caractérisé par le fait que le générateur de signaux supplémentaires (15a) produit des signaux supplémentaires numériques.

6. Compensateur d'échos suivant l'une des revendications 1 à 5 pour des signaux numériques comprimés dans la ligne interurbaine (6,19), caractérisé par le fait
qu'il est prévu un circuit soustracteur numérique (3a), qu'un premier dispositif numérique d'expansion (2) est branché en amont du circuit soustracteur numérique (3a) et qu'un dispositif numérique de compression (4) est branché en aval de ce circuit soustracteur,
qu'il est prévu un circuit additionneur numérique (11a), et qu'un second dispositif numérique d'expansion (16) est branché en amont de la première entrée du circuit additionneur numérique (11a) (figure 1).

7. Suppresseur d'échos suivant la revendication 6, caractérisé par le fait qu'à la place du circuit additionneur numérique (11a) et du second dispositif numérique d'expansion (16), il est prévu un troisième dispositif numérique d'expansion (39), qui ajoute une tension continue (figure 4).

8. Suppresseur d'échos suivant l'une des revendications 1 à 5 pour des signaux analogiques présents dans la ligne interurbaine (6,19), caractérisé par le fait qu'un second convertisseur numérique/analogique (41) et un premier filtre passe-bas (40) sont branchés en aval de la sortie (8) du filtre transversal adaptatif (7),
qu'un premier filtre passe-bande (42) et un troisième convertisseur analogique/numérique (43) sont branchés en amont de l'entrée de commande (9) du filtre transversal adaptatif (7), et
qu un second filtre passe-bande (45) et un quatrième convertisseur analogique/numérique (44) sont branchés en amont du circuit additionneur numérique (11a) (figure 5).

9. Suppresseur d'échos suivant la revendication 8, caractérisé par le fait
que le circuit additionneur numérique (11a) est remplacé par un circuit additionneur analogique (11b), et
que le circuit additionneur analogique (11b) et le quatrième convertisseur analogique/numérique (44) sont permutés (figure 6).

10. Compensateur d'échos suivant l'une des revendications 1 à 5 pour des signaux analogiques dans la ligne interurbaine (6,19), caractérisé par le fait
qu un troisième filtre passe-bande (46) et un troisième convertisseur analogique/numérique (47) sont branchés en amont du circuit soustracteur numérique (3a), qu'un second convertisseur numérique/analogique (48) et un second filtre passe-bas (49) sont branchés en aval de ce circuit soustracteur et que le circuit additionneur numérique (11a), le troisième filtre passe-bande (45) et le second convertisseur analogique/numérique (44) sont branchés en amont du circuit soustracteur (figure 7).

# FIG 1

# FIG 2

# FIG 3

# FIG 4

# FIG 5

# FIG 6

# FIG 7